# FASCICULE DE BREVET EUROPEEN

(11) **EP 3 327 325 B1**
(45) Date de publication et mention de la délivrance du brevet: **04.09.2019**
(21) Numéro de dépôt: 17203003.3
(22) Date de dépôt: 22.11.2017
(51) Int. Cl.: F16L 1/20, E21B 17/02, F16L 3/06, F16L 3/137, H02G 3/32, H02G 9/12

(54) **DISPOSITIF CONÇU POUR FIXER AU MOINS UN CABLE LE LONG D'UN CONDUIT, ET PROCEDE DE MISE EN OEUVRE D'UN TEL DISPOSITIF**
VORRICHTUNG ZUR BEFESTIGUNG MINDESTENS EINES KABELS AN EINER LEITUNG, UND VERFAHREN ZUR UMSETZUNG EINER SOLCHEN VORRICHTUNG
DEVICE DESIGNED FOR ATTACHING AT LEAST ONE CABLE ALONG A PIPE, AND METHOD FOR IMPLEMENTING SUCH A DEVICE

(30) Priorité: 28.11.2016 FR 1661604
(43) Date de publication de la demande: 30.05.2018
(73) Titulaire: Financiere de Beaumont- FDB, 26100 Romans (FR)
(72) Inventeur: COURBIS, Hervé, 26100 Romans sur Isere (FR)
(74) Mandataire: Cabinet Laurent & Charras

(56) Documents cités:
- EP-A2- 0 021 597
- WO-A1-2013/060962
- DE-U1- 29 900 202
- US-A1- 2007 209 804
- US-A1- 2011 006 512

## Description

La présente invention concerne un dispositif conçu pour fixer au moins un câble le long d'un conduit. L'invention concerne également un procédé de mise en oeuvre d'un tel dispositif.

Le domaine de l'invention est celui des conduits, tels que les pipelines pour le transport d'hydrocarbures. De tels conduits peuvent s'étendre sur plusieurs centaines de kilomètres, sur terre, sous terre et/ou sous l'eau.

Dans ce domaine, il est connu de fixer différents éléments le long des conduits, comme des câbles électriques ou des systèmes de capteurs. Ces éléments doivent rester en place pendant toute la durée de vie du conduit, par exemple 25 ans. Lorsque le conduit est immergé, ces éléments doivent résister aux pressions, aux variations de températures, aux courants, à la faune et à la flore sous-marines, etc.

Pour fixer les câbles au conduit, il est connu de positionner des dispositifs supports le long du conduit à l'air libre, par exemple sur un bateau. Chaque dispositif est accroché au conduit grâce à un organe de fixation du type sangle ou collier de serrage.

WO2013060962A1 décrit un exemple de dispositif support développé par le Demandeur. Le dispositif est constitué de deux pièces, à savoir une base et un de levier de verrouillage basculant. Une fois accrochée au conduit, la base reçoit le câble, puis le levier de verrouillage permet de bloquer le câble en position. De préférence, la base est en élastomère de polyuréthane, tel que connu sous la marque COURBHANE du Demandeur.

Pour mettre le conduit en place, par exemple pour guider le conduit hors du bateau, il est connu de mettre en oeuvre des moyens d'entraînement motorisés, par exemple des rouleaux presseurs. Les rouleaux sont positionnés sous le conduit lorsque celui-ci est guidé horizontalement, ou de part et d'autre du conduit lorsque celui-ci est guidé verticalement. La rotation des rouleaux, appuyés contre le conduit, provoque son déplacement.

Plus le conduit présente des dimensions importantes, plus les rouleaux présentent des dimensions importantes et exercent des efforts d'entraînement élevés sur le conduit. Dans certains cas, la poussée des rouleaux sur le dispositif support provoquent la rupture de l'organe de fixation et l'arrachement du dispositif.

Le but de la présente invention est de proposer un dispositif support adapté pour tous types de conduits, y compris ceux devant être mis en place sous des efforts d'entraînement élevés.

A cet effet, l'invention a pour objet un dispositif conçu pour fixer au moins un câble le long d'un conduit, le dispositif comprenant :
- une base constituant une partie de hauteur maximale du dispositif ;
- un canal qui s'étend selon un axe longitudinal sur un côté supérieur du dispositif et qui est destiné à recevoir le câble ;
- une surface d'appui qui est formée sur un côté inférieur du dispositif et qui est destinée à venir reposer en appui contre le conduit ;
- deux mâchoires qui sont formées en saillie sur la base du côté supérieur, qui bordent le canal de part et d'autre de l'axe longitudinal et qui constituent une pince prévue pour enserrer le câble ; et
- un passage transversal qui est formé à travers la base, entre le canal et la surface d'appui, et qui est destiné à recevoir un organe de fixation pour plaquer le dispositif contre le conduit ;
Le dispositif est caractérisé en ce qu'il comprend une extension longitudinale prolongeant la base, plus allongée que la base, et présentant une hauteur globalement décroissante en s'éloignant de la base suivant l'axe longitudinal.

Ainsi, l'invention permet d'éviter le décrochage du dispositif lors de son passage sous les rouleaux d'entraînement, y compris lorsque ces rouleaux exercent des efforts d'entraînement élevés sur le conduit et le dispositif. Les rouleaux écrasent progressivement l'extension longitudinale, puis la base, sans rompre l'organe de fixation et arracher le dispositif.

Selon d'autres caractéristiques avantageuses de l'invention, prises isolément ou en combinaison :
- L'extension longitudinale est destinée à recevoir un deuxième organe de fixation du dispositif contre le conduit.
- L'extension longitudinale comporte une rainure transversale qui est destinée à recevoir un deuxième organe de fixation du dispositif contre le conduit.
- L'extension longitudinale comporte une première portion qui présente une hauteur constante et une deuxième portion qui présente une hauteur globalement décroissante en s'éloignant de la base suivant l'axe longitudinal.
- L'extension longitudinale présente une longueur au moins 2 fois supérieure à la longueur de la base.
- Le canal s'étend du côté supérieur du dispositif tout le long de la base et partiellement le long de l'extension longitudinale.
- Une rampe inclinée est formée du côté supérieur du dispositif, entre la base et l'extension longitudinale, de part et d'autre du canal.
- Une deuxième extension longitudinale prolonge la base à l'opposé de l'extension longitudinale et présente une hauteur globalement décroissante en s'éloignant de la base suivant l'axe longitudinal.
- Un socle est formé en débordement transversal de part et d'autre de la base et délimite en partie la surface d'appui.
- Le dispositif présente une forme de croix comprenant un pied constitué par l'extension longitudinale, une pointe constituée par la deuxième extension longitudinale et deux branches latérales constituées par le socle.
- Le dispositif est fixé sur le conduit par deux organes de fixation espacés.

L'invention a également pour objet un procédé de mise en oeuvre d'un dispositif tel que mentionné ci-dessus. Le procédé est caractérisé en ce qu'il comprend les étapes suivantes :
a) le dispositif est fixé sur le conduit en utilisant au moins un organe de fixation ; puis
b) des moyens d'entraînement déplacent progressivement le conduit selon une première direction parallèle à l'axe longitudinal du dispositif, en appuyant successivement sur le conduit, l'extension longitudinale et la base, puis de nouveau sur le conduit.

L'invention sera mieux comprise à la lecture de la description qui va suivre, donnée uniquement à titre d'exemple non limitatif et faite en référence aux dessins annexés sur lesquels :
- la figure 1 est une coupe transversale d'un conduit équipé d'un dispositif conforme à l'invention, supportant un câble et maintenu en position par deux sangles ;
- la figure 2 est une vue de côté selon la flèche II à la figure 1 ;
- la figure 3 est une vue avant du dispositif, selon la flèche III à la figure 2 ;
- la figure 4 est une vue de côté du dispositif, selon la flèche IV à la figure 3 ;
- la figure 5 est une vue de dessus du dispositif, selon la flèche V à la figure 4 ;
- la figure 6 est une vue en perspective du dispositif ; et
- les figures 7 et 8 sont des vues analogues aux figures 1 et 2, pour un dispositif conforme à un deuxième mode de réalisation de l'invention.

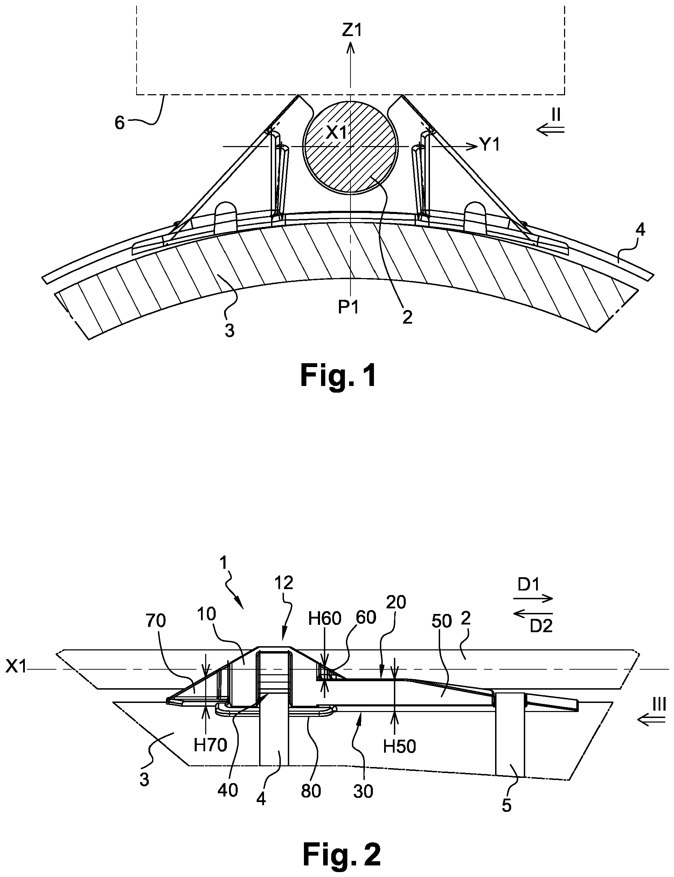

Sur les figures 1 à 6 est représenté un dispositif support 1 conforme à l'invention.

Sur les figures 1 et 2, le dispositif 1 est montré en service, assurant la fonction de positionnement d'un câble 2 le long d'un conduit 3. Le dispositif 1 est arrimé au conduit 3 grâce à deux sangles 4 et 5. Plus précisément, les sangles 4 et 5 permettent de plaquer le dispositif 1 contre le conduit 3 à l'air libre, puis maintenir le dispositif 1 en position d'appui contre le conduit 3 lorsque ce dernier est en service, installé sur terre, sous terre ou sous l'eau. A titre d'exemple non limitatif, le câble 2 présente un diamètre de l'ordre de 44 millimètres, le conduit 3 présente un diamètre de l'ordre de 700 mm, tandis que les sangles 4 et 5 présentent une largeur de l'ordre de 32 mm.

Des moyens d'entraînement 6, par exemple des rouleaux motorisés, sont utilisés pour déplacer le conduit 3 suivant une direction D1. Dans un but de simplification, ces moyens d'entraînement 6 sont représentés schématiquement et partiellement, sous forme d'un unique rouleau en pointillés, uniquement sur la figure 1.

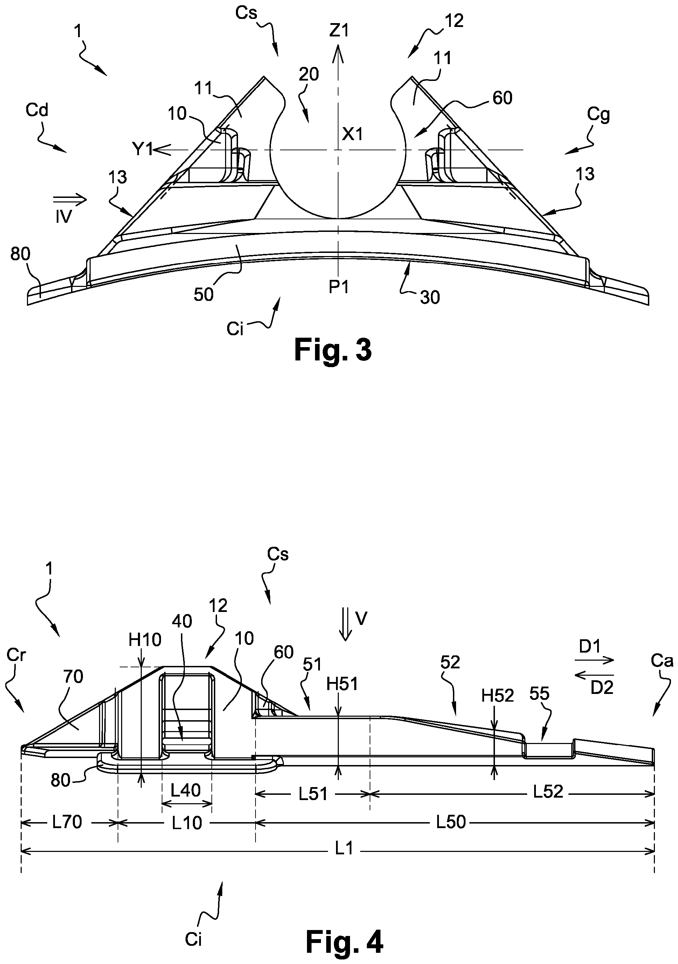

Sur les figures 3 à 6, le dispositif 1 est montré seul afin de mieux distinguer ses parties constitutives.

Dans un but de repérage dans l'espace, on définit un repère orthogonal comprenant trois axes perpendiculaires X1, Y1 et Z1. Le dispositif 1, le câble 2 et le conduit 3 s'étendent suivant une direction longitudinale définie par l'axe X1. Une direction transversale est définie par l'axe Y1. Une direction radiale au conduit 3 est définie par l'axe Z1. Dans le présent texte, les longueurs sont mesurées suivant l'axe X1, les largeurs suivant l'axe Y1, et les hauteurs suivant l'axe Z1.

Egalement, on définit un plan P1 comprenant les axes X1 et Z1. Le plan P1 constitue un plan de symétrie du dispositif 1, du câble 2 et du conduit 3.

Enfin, on définit un côté supérieur Cs, un côté inférieur Ci, un côté avant Ca, un côté arrière Cr, un côté gauche Cg et un côté droit Cd du dispositif 1.

Le dispositif 1 est une pièce monobloc en matière plastique. De préférence, le dispositif 1 est en élastomère de polyuréthane, tel que connu sous la marque COURBHANE du Demandeur.

Le dispositif 1 comporte une base 10, un canal 20, une surface d'appui 30, un passage 40, une extension longitudinale avant 50, une rampe 60, une extension longitudinale arrière 70, et un socle 80.

En vue de dessus, le dispositif 1 présente une forme de croix centrée sur la base 10. La croix comprend un pied constitué par l'extension 50, une pointe constituée par l'extension 70, et deux branches latérales constituées par le socle 80.

Le dispositif 1 présente une longueur L1. A titre d'exemple, cette longueur L1 est de l'ordre de 300 mm.

La base 10 est un polyèdre irrégulier présentant une longueur L10 et une hauteur H10. La base 10 constitue la partie la plus massive du dispositif 1. La hauteur H10 constitue la plus grande hauteur du dispositif 1. A titre d'exemple, la longueur L10 est de l'ordre de 85 mm, tandis que la hauteur H10 est de l'ordre de 65 mm.

La base 10 comporte deux mâchoires 11, formées en saillie du côté supérieur Cs, sur chaque côté Cg et Cd. Les mâchoires 11 bordent le canal 20 de part et d'autre de l'axe longitudinal X1. Les mâchoires 11 constituent une pince 12 prévue pour enserrer le câble 2. A cet effet, la pince 12 entoure l'axe X1 sur un secteur angulaire supérieur à 180 degrés, de préférence supérieur à 200 degrés, par exemple 270 degrés sur l'exemple des figures.

De chaque côté Cg et Cd, la base 10 comporte une rampe avant 13 et une rampe arrière 14. Chacune des rampes latérales 13 et 14 présentent une surface plane inclinée, depuis le sommet de la base 10 jusqu'au socle 80. Les rampes avant 13 et les rampes arrière 14 sont séparées par le passage 40. Les rampes 13 se prolongent sur les côtés Cg et Cd, le long de l'extension 50.

Egalement de chaque côté Cg et Cd, la base 10 comporte une rainure 15 ouverte du côté inférieur Ci, autrement dit débouchant au niveau de la surface d'appui 30. Chaque rainure 15 traverse les rampes 13 et 14 suivant la direction longitudinale définie par l'axe X1. Les rainures 15 sont prévues pour faciliter la déformation de la base 10 et du socle 80, de sorte que la surface d'appui 30 soit plaquée contre le conduit 3 lorsque la sangle 4 est positionnée à travers le passage 40 et resserrée sur le conduit 3.

Le canal 20 est formé du côté supérieur Cs du dispositif 10 pour recevoir le câble 2. Le canal est centré sur l'axe X1. Le canal 20 s'étend sur toute la longueur de la base 10, entre les mâchoires 11. De part et d'autre de la base 10 suivant l'axe X1, le canal 20 s'étend sur une partie de l'extension 50 et sur une partie de l'extension 70.

La surface d'appui 30 est formée du côté inférieur Ci du dispositif 1, pour venir reposer en appui contre le conduit 3. La surface d'appui 30 s'étend sous la base 10, les extensions 50 et 70 et le socle 80. Comme le conduit 3 est cylindrique sur l'exemple des figures, la surface d'appui 30 est concave et présente un profil cylindrique.

Le passage transversal 40 est formé à travers la base 10 pour permettre le passage de la sangle 4. Suivant l'axe X1, le passage 40 est formé entre les rampes 13 et 14, avec une longueur L40 égale à environ un tiers de la longueur L10. Suivant l'axe Z1, le passage 40 est formé entre le canal 20 et la surface d'appui 30. Le passage 40 est destiné à recevoir la sangle 4 de maintien du dispositif 1 en appui contre le conduit 3. Plus précisément, cette sangle 4 permet de plaquer la base 10 contre le conduit 3.

L'extension longitudinale avant 50 est un polyèdre irrégulier présentant une longueur L50, une hauteur H50 et une largeur W50. L'extension 50 s'étend dans le prolongement de la base 10 du côté avant Ca. L'extension 50 constitue la partie la plus allongée du dispositif 1.

Selon l'invention, la hauteur H50 est globalement décroissante en s'éloignant de la base 10 suivant l'axe X1. En outre, la longueur L50 est supérieure à la longueur L10, de préférence au moins deux fois supérieure. Cette configuration permet aux moyens d'entraînement 6 de grimper sur l'extension 50 (généralement en roulant, par exemple lorsque les moyens d'entraînement 6 sont des rouleaux). Les moyens d'entraînement 6 appuient sur l'extension 50 du côté supérieur Cs, tout en progressant selon une direction D2 dirigée vers la base 10, à l'opposé de la direction D1 de déplacement du conduit 3. Les moyens d'entraînement 6 grimpent ensuite sur la base 10, en appuyant sur le sommet de la base 10 et/ou sur les rampes latérales 13 et 14, sans repousser la base 10 du côté arrière Cr. En comparaison avec un dispositif support dépourvu d'extension 50 et de sangle 5, le risque de rupture de la sangle 4 et de décrochage du dispositif 1 est donc fortement réduit.

Sur l'exemple des figures, l'extension 50 comporte une première portion 51 qui présente une hauteur H51 constante et une deuxième portion 52 qui présente une hauteur H52 globalement décroissante en s'éloignant de la base 10 suivant l'axe X1. La portion 52 a une longueur L52 supérieure à la longueur L51 de la portion 50.

L'extension 50 comporte une rainure transversale 55 formée du côté supérieur Cs de la portion 52. La rainure 55 sépare la portion 52 en deux zones distinctes, à savoir une zone de raccord avec la portion 51 et une zone d'extrémité présentant une hauteur H50 minimale.

La rainure 55 est destinée à recevoir la deuxième sangle 5 de maintien du dispositif 1 en appui contre le conduit 3. Plus précisément, cette sangle 5 permet de plaquer l'extension 50 contre le conduit 3. La rainure 55 facilite le positionnement de la sangle 5 sur l'extension 50 et protège la sangle 5 lors du passage des rouleaux.

En variante non représenté et non préférée, l'extension 50 peut être dépourvue de rainure 55. Dans ce cas, la sangle 5 peut être serrée directement sur la surface supérieure de la portion 52. Selon une autre variante non préférée, le dispositif 1 peut être fixé au conduit 3 uniquement grâce à la sangle 4, sans utiliser de sangle 5.

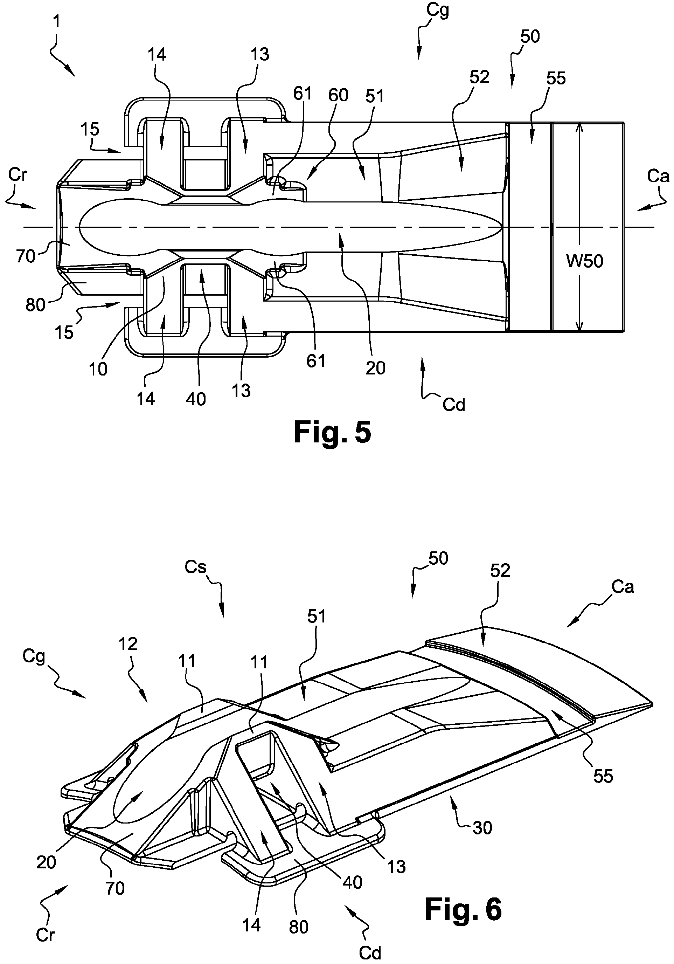

Comme montré à la figure 5, le canal 20 s'étend tout le long de la portion 51 et sur une partie de la portion 52, jusqu'à la rainure 55.

Sur l'exemple des figures, la largeur W50 est constante. En alternative, la largueur W50 peut varier en s'éloignant de la base 10.

A titre d'exemple, la longueur L50 est de l'ordre de 235 mm, la largeur W50 est de l'ordre de 170 mm, tandis que la hauteur H51 est de l'ordre de 50 mm.

La rampe inclinée 60 est formée du côté supérieur Cs du dispositif 1, entre la base 10 et l'extension 50. Plus précisément, la rampe 60 est constituée de deux surfaces planes 61 formées de part et d'autre du canal 20, entre le sommet de la base 10 et la portion 51 de l'extension 50. La rampe 60 présente une hauteur H60 croissante depuis la portion 51 jusqu'au sommet de la base 10. La présence de la rampe 60 facilite le passage des moyens d'entraînement 6 de l'extension 50 à la base 10.

L'extension longitudinale arrière 70 est un polyèdre irrégulier présentant une longueur L70 et une hauteur H70. L'extension 70 s'étend dans le prolongement de la base 10 du côté arrière Cr. La hauteur H70 est décroissante en s'éloignant de la base 10 à l'opposé de l'extension 50, suivant l'axe X1. L'extension 70 permet de guider les moyens d'entraînement 6 qui redescendent de la base 10 suivant la direction D2. La longueur L70 est inférieure à la longueur L50, et de préférence inférieure à la longueur L10.

Le socle 80 est formé en débordement transversal de part et d'autre de la base 10 et de l'extension 70. Le socle 80 délimite en partie la surface d'appui 30. Le socle 80 permet d'augmenter l'étendue de la surface d'appui 30, et donc l'étendue du dispositif 1 plaqué contre le conduit 3.

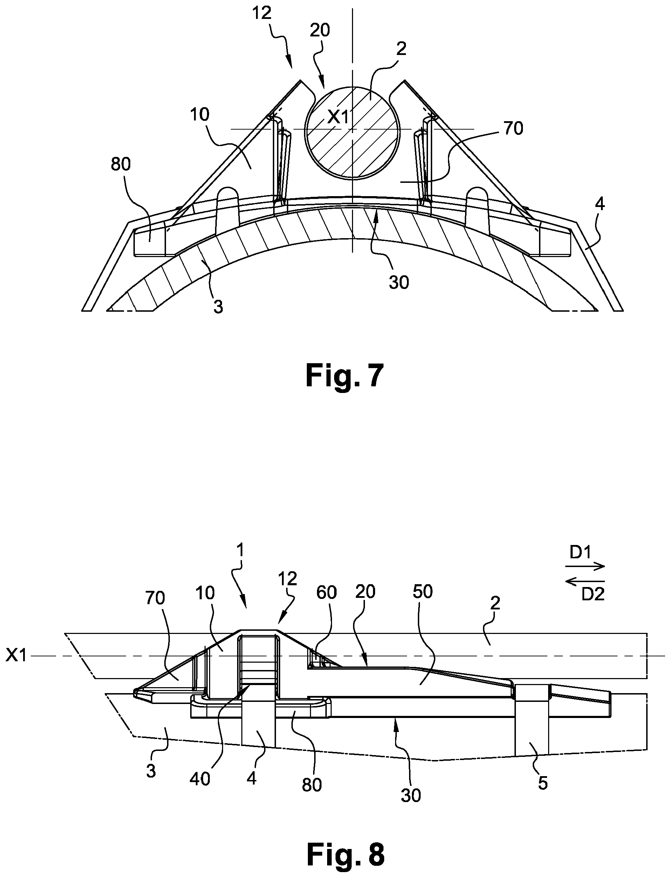

Un second mode de réalisation d'un dispositif 1 conforme à l'invention est montré aux figures 7 et 8. Certains éléments constitutifs de ce dispositif 1 sont comparables à ceux du premier mode de réalisation décrit plus haut et, dans un but de simplification, portent les mêmes références numériques.

Le conduit 3 présente un diamètre inférieur à celui du premier mode de réalisation. Par exemple, le conduit 3 présente un diamètre de l'ordre de 340 mm. Ainsi, la concavité de la surface 30 est plus prononcée. De plus, le socle 80 présente une hauteur plus importante.

Par ailleurs, le dispositif 1 peut être conformé différemment des figures 1 à 8 sans sortir du cadre de l'invention.

En variante non représentée, le dispositif 1 peut présenter des formes et dimensions différentes, pour s'adapter aux formes et dimensions du câble 2 et du conduit 3.

Selon une variante non représentée, le dispositif 1 peut être configuré pour supporter plusieurs câbles 2. Par exemple, la pince 12 peut être configurée pour recevoir plusieurs câbles 2. En alternative, le dispositif 1 peut comporter plusieurs pinces 12.

Selon d'autres variantes non représentées, le dispositif 1 peut être dépourvu de rampe 60, d'extension 70 et/ou de socle 80.

En outre, les caractéristiques techniques des différents modes de réalisation et variantes mentionnés ci-dessus peuvent être, en totalité ou pour certaines d'entre elles, combinées entre elles. Ainsi, le dispositif 1 peut être adapté en termes de coût, de fonctionnalités et de performance.

## Revendications

1. Dispositif (1) conçu pour fixer au moins un câble (2) le long d'un conduit (3), le dispositif (1) comprenant :
- une base (10) constituant une partie de hauteur (H10) maximale du dispositif (1) ;
- un canal (20) qui s'étend selon un axe longitudinal (X1) sur un côté supérieur (Cs) du dispositif (1) et qui est destiné à recevoir le câble (2) ;
- une surface d'appui (30) qui est formée sur un côté inférieur (Ci) du dispositif (1) et qui est destinée à venir reposer en appui contre le conduit (3) ;
- deux mâchoires (11) qui sont formées en saillie sur la base (10) du côté supérieur (Cs), qui bordent le canal (20) de part et d'autre de l'axe longitudinal (X1) et qui constituent une pince (12) prévue pour enserrer le câble (2) ; et
- un passage transversal (40) qui est formé à travers la base (10), entre le canal (20) et la surface d'appui (30), et qui est destiné à recevoir un organe de fixation (4) pour plaquer le dispositif (1) contre le conduit (3) ;
**caractérisé en ce que** le dispositif (1) comprend une extension longitudinale (50) prolongeant la base (10), plus allongée que la base (10), et présentant une hauteur (H50) globalement décroissante en s'éloignant de la base (10) suivant l'axe longitudinal (X1).

2. Dispositif (1) selon la revendication 1, **caractérisé en ce que** l'extension longitudinale (50) comporte une rainure transversale (55) qui est destinée à recevoir un deuxième organe (5) de fixation du dispositif (1) contre le conduit (3).

3. Dispositif (1) selon l'une des revendications précédentes, **caractérisé en ce que** l'extension longitudinale (50) comporte une première portion (51) qui présente une hauteur (H51) constante et une deuxième portion (52) qui présente une hauteur (H52) globalement décroissante en s'éloignant de la base (10) suivant l'axe longitudinal (X1).

4. Dispositif (1) selon l'une des revendications précédentes, **caractérisé en ce que** l'extension longitudinale (50) présente une longueur (L50) au moins 2 fois supérieure à la longueur (L10) de la base (10).

5. Dispositif (1) selon l'une des revendications précédentes, **caractérisé en ce que** le canal (20) s'étend du côté supérieur (Cs) du dispositif (1) tout le long de la base (10) et partiellement le long de l'extension longitudinale (50).

6. Dispositif (1) selon l'une des revendications précédentes, **caractérisé en ce qu'**une rampe inclinée (60) est formée du côté supérieur (Cs) du dispositif (1), entre la base (10) et l'extension longitudinale (50), de part et d'autre du canal (20).

7. Dispositif (1) selon l'une des revendications précédentes, **caractérisé en ce qu'**une deuxième extension longitudinale (70) prolonge la base (10) à l'opposé de l'extension longitudinale (50) et présente une hauteur (H70) globalement décroissante en s'éloignant de la base (10) suivant l'axe longitudinal (X1).

8. Dispositif (1) selon l'une des revendications précédentes, **caractérisé en ce qu'**un socle (80) est formé en débordement transversal de part et d'autre de la base (10) et délimite en partie la surface d'appui (30).

9. Dispositif (1) selon les revendications 7 et 8 en combinaison, **caractérisé en ce qu'**il présente une forme de croix comprenant un pied constitué par l'extension longitudinale (50), une pointe constituée par la deuxième extension longitudinale (70) et deux branches latérales constituées par le socle (80).

10. Procédé de mise en oeuvre d'un dispositif (1) selon l'une des revendications 1 à 9, **caractérisé en ce qu'**il comprend les étapes successives suivantes :
a) le dispositif (1) est fixé sur le conduit (3) par au moins un organe de fixation (4 ; 4, 5) ; puis
b) des moyens d'entraînement (6) déplacent progressivement le conduit (3) selon une première direction (D1) parallèle à l'axe longitudinal (X1) du dispositif (1), en appuyant successivement sur le conduit (3), l'extension longitudinale (50) et la base (10), puis de nouveau sur le conduit (3).

## Patentansprüche

1. Vorrichtung (1), konzipiert zur Befestigung mindestens eines Kabels (2) entlang einer Rohrleitung (3), wobei die Vorrichtung (1) umfasst:
- eine Basis (10), die ein Teil mit maximal der Höhe (H10) der Vorrichtung (1) bildet;
- ein Kanal (20), der entlang einer Längsachse (X1) auf einer oberen Seite (Cs) der Vorrichtung (1) verläuft und der zur Aufnahme des Kabels (2) bestimmt ist;
- eine Auflagefläche (30) gebildet auf einer unteren Seite (Ci) der Vorrichtung (1), bestimmt dazu, auf der Rohrleitung (3) aufzuliegen;
- zwei Backen (11) auskragend geformt auf der Basis (10) an der oberen Seite (Cs), die beiderseits des Kanals (20) entlang der Längsachse (X1) verlaufen und die eine Klammer (12) bilden, die das Kabel (2) umschließt; und
- eine Querpassage (40), gebildet durch die Basis (10) hindurch, zwischen dem Kanal (20) und der Auflagefläche (30), dazu bestimmt ein Befestigungselement (4) aufzunehmen, um die Vorrichtung (1) gegen die Rohrleitung (3) zu drücken;
**dadurch gekennzeichnet, dass** die Vorrichtung (1) eine Längserweiterung (50) umfasst, die die Basis (10) verlängert, länger gestreckt als die Basis (10) und die eine Höhe (H50) aufweist, die global mit zunehmender Entfernung von der Basis (10) entlang der Längsachse (X1) abnimmt.

2. Vorrichtung (1) gemäß Anspruch 1, **dadurch gekennzeichnet, dass** die Längserweiterung (50) eine Quernut (55) enthält, die zur Aufnahme eines zweiten Befestigungselementes (5) der Vorrichtung (1) an der Rohrleitung (3) dient.

3. Vorrichtung (1) gemäß einem der vorhergehenden Ansprüche, **dadurch gekennzeichnet, dass** die Längserweiterung (50) einen ersten Abschnitt (51) enthält, der eine konstante Höhe (H51) aufweist sowie einen zweiten Abschnitt (52), der eine Höhe (H52) aufweist, die sich global verringert, je weiter sie sich von der Basis (10) entlang der Längsachse (X1) entfernt.

4. Vorrichtung (1) nach einem der vorstehenden Ansprüche, **dadurch gekennzeichnet, dass** die Längserweiterung (50) eine Länge (L50) aufweist, die mindestens zweimal länger ist, als die Länge (L10) der Basis (10).

5. Vorrichtung (1) nach einem der vorstehenden Ansprüche, **dadurch gekennzeichnet, dass** der Kanal (20) auf der oberen Seite (Cs) der Vorrichtung (1) entlang der Basis (10) und teilweise entlang der Längserweiterung (50) verläuft.

6. Vorrichtung (1) gemäß einem der vorhergehenden Ansprüche, **dadurch gekennzeichnet, dass** eine geneigte Rampe (60) auf der oberen Seite (Cs) der Vorrichtung (1) zwischen der Basis (10) und der Längserweiterung (50) beiderseits des Kanals (20) gebildet wird.

7. Vorrichtung (1) gemäß einem der vorhergehenden Ansprüche, **dadurch gekennzeichnet, dass** eine zweite Längserweiterung (70), gegenüber der Längserweiterung (50), die Basis (10) verlängert, und eine Höhe (H70) aufweist, die global mit zunehmender Entfernung von der Basis (10) entlang der Längsachse (X1) abnimmt.

8. Vorrichtung (1) gemäß einem der vorhergehenden Ansprüche, **dadurch gekennzeichnet, dass** ein Sockel (80), in Querrichtung beiderseits der Basis (10) überstehend geformt wird, der die Auflagefläche (30) teilweise begrenzt.

9. Vorrichtung (1) gemäß einem der vorhergehenden Ansprüche 7 oder 8, **dadurch gekennzeichnet, dass** sie eine Kreuzform aufweist, mit einem Fuss, bestehend aus der Längserweiterung (50), einer Spitze, bestehend aus einer zweite Längserweiterung (70) und zwei Seitenarmen gebildet vom Sockel (80).

10. Verfahren zum Einsatz einer Vorrichtung (1) nach einem der Ansprüche 1 bis 9, **dadurch gekennzeichnet, dass** es die folgenden Schritte umfasst:
a) die Vorrichtung (1) wird auf der Rohrleitung (3) über mindestens ein Befestigungselement (4; 4, 5) befestigt; dann
b) Antriebsvorrichtungen verschieben (6) die Rohrleitung (3) progressiv in einer ersten Richtung (D1) parallel zur Längsachse (X1) der Vorrichtung (1), indem nacheinander auf die Rohrleitung (3), die Längserweiterung (50) und die Basis (10) gedrückt wird, dann erneut auf die Rohrleitung (3).

## Claims

1. Device (1) designed to attach at least one cable (2) along a pipe (3), the device (1) comprising:
- a base (10) constituting a part of maximum height (H10) of the device (1);
- a channel (20) that extends along a longitudinal axis (X1) on an upper side (Cs) of the device (1) and which is intended to receive the cable (2);
- a support surface (30) which is formed on a lower side (Ci) of the device (1) and which is intended to rest against the pipe (3);
- two jaws (11) which are formed protruding from the base (10) on the upper side (Cs), which border the channel (20) on either side of the longitudinal axis (X1) and which constitute a clamp (12) provided to grip the cable (2); and
- a transverse passage (40) which is formed through the base (10), between the channel (20) and the support surface (30), and which is intended to receive an attachment member (4) to press the device (1) against the pipe (3);
**characterized in that** the device (1) comprises a longitudinal extension (50) prolonging the base (10), more elongated than the base (10), and having a height (H50) decreasing overall moving away from the base (10) along the longitudinal axis (X1).

2. Device (1) according to claim 1, **characterized in that** the longitudinal extension (50) comprises a transverse groove (55) which is intended to receive a second member (5) for attachment of the device (1) against the pipe (3).

3. Device (1) according to one of the previous claims, **characterized in that** the longitudinal extension (50) comprises a first portion (51) which has a constant height (H51) and a second portion (52) which has a height (H52) decreasing overall moving away from the base (10) along the longitudinal axis (X1).

4. Device (1) according to one of the previous claims, **characterized in that** the longitudinal extension (50) has a length (L50) at least twice that of the length (L10) of the base (10).

5. Device (1)according to one of the previous claims, **characterized in that** the channel (20) extends from the upper side (Cs) of the device (1) all along the base (10) and partially along the longitudinal extension (50).

6. Device (1) according to one of the previous claims, **characterized in that** a sloped ramp (60) is formed on the upper side (Cs) of the device (1), between the base (10) and the longitudinal extension (50), on either side of the channel (20).

7. Device (1) according to one of the previous claims, **characterized in that** a second longitudinal extension (70) prolongs the base (10) opposite to the longitudinal extension (50) and has a height (H70) decreasing overall moving away from the base (10) along the longitudinal axis (X1).

8. Device (1) according to one of the previous claims, **characterized in that** a mounting plate (80) is formed that transversely extends past either side of the base (10) and partly defines the support surface (30).

9. Device (1) according to claim 7 and 8 combined, **characterized in that** it is cross-shaped comprising a foot composed of the longitudinal extension (50), a tip composed of the second longitudinal extension (70) and two lateral branches composed of the mounting plate (80).

10. Method of implementing a device (1) according to any of claims 1 to 9, **characterized in that** the method comprises the following successive steps:
a) the device (1) is attached to the pipe (3), using at least one attachment member (4; 4, 5); then
b) drive means (6) progressively move the pipe (3) along a first direction (D1) parallel to the longitudinal axis (X1) of the device (1), pressing successively on the pipe (3), the longitudinal extension (50) and the base (10), then again on the pipe (3).
